# EUROPEAN PATENT SPECIFICATION

(11) **EP 1 209 103 B1**
(45) Date of publication and mention of the grant of the patent: **26.05.2010**
(21) Application number: 00830760.5
(22) Date of filing: 17.11.2000
(51) Int. Cl.: B65G 47/14

(54) **Machine for orienting and aligning plastic containers of varying size**
Maschine zum Orientieren und Ausrichten von Kunststoffbehältern unterschiedlicher Grösse
Machine pour l'orientation et l'alignement de récipiénts de tailles differentes

(43) Date of publication of application: 29.05.2002
(73) Proprietor: PROMEC S.R.L., 43010 Fontevivo (Parma) (IT)
(72) Inventor: Rocchi, Flavio, 43010 Fontevivo (Parma) (IT)
(74) Representative: Lanzoni, Luciano

(56) References cited:
- WO-A2-98/21129
- US-A- 4 825 995

## Description

The present invention applies to a machine for orienting and aligning plastic containers of varying size, referred to in technical jargon simply as "unscramblers".

These unscramblers are designed to place the containers, fed in bulk from blow-moulding and moulding machines, in a vertical attitude and to arrange them in a straight line for transportation to filling machines other machines, such as blow-moulders, rinsers and inspection units.

There are several types of unscrambler which are generally classified according to the method used to pick up each individual container and then position it in the desired manner.

All unscramblers are equipped with a rotating drum which acts as a hopper, receiving the containers conveyed in bulk; some unscramblers are equipped with a drum which rotates around a vertical axis whose base is constructed in the form of a fixed cone; this allows the containers to roll and slide more easily towards the sides of the rotating drum which have blades or bars designed to push the containers along helical tracks extending from the base of the drum up to the upper rim.

The top of the rotating drum includes a plurality of support pads of a size capable of accommodating a container up to a maximum size. A fixed drum is mounted externally at a certain distance from the rotating drum which, together with the first, creates an annular chamber; a fixed annular ledge along which the containers slide is mounted at the top of the chamber. The annular ledge forms the base of the pads and has one or more breaks in it to allow the containers to drop, neck upwards by operation of a well-known selector device.

A plurality of funnel-shaped chutes, connected to the rotating drum, is mounted underneath the annular ledge; these chutes direct the containers onto a plurality of tracks formed by radial walls connected to a second rotating drum mounted externally and coaxially below the first drum which constitutes the bulk loading hopper.

Machines of this type, for example, are described in US-A- 4,825,995 and WO-A-98/21129, which discloses a machine according to the preamble of claims 1 and 5.

EP-A-0540477 discloses another type of unscrambler, in which elevators composed of support pads on which the containers can be placed are mounted inside the first internal upper rotating drum. The elevators are driven by arms arranged radially around the drum and rotably fixed thereto. One end of the arms slides along the profile of a cam, appropriately shaped to allow the elevators to travel at least one forward and return stroke between the base and top of the drum, for each rotation of the drum.

Also in this type of machine, a fixed drum is mounted externally at a certain distance from the internal upper rotating drum; the fixed drum has an annular sliding ledge for the containers mounted underneath which constitutes the base of a plurality of support pads connected to the first rotating drum.

The annular ledge has one or more breaks in it to allow the containers to drop, neck upwards, into a plurality of funnel-shaped hoppers connected to the external wall of the first rotating drum.

This type of unscrambler also features a second rotating drum mounted externally and coaxially below the first drum which constitutes the bulk loading hopper. The second drum includes a plurality of chutes which represent an extension of the chutes connected to the loading hopper drum. The number of chutes mounted on the rotating drum is significantly higher than the number of tracks mounted on the loading hopper, with the aim of increasing the output of the machine. The rotation speed of the second rotating drum must clearly differ from the rotating speed of the first loading drum.

Well-known types of unscrambler are equipped with a conventional drive unit which simultaneously drives the first internal upper drum and the second external lower drum coaxial with it and the rotation of both is co-ordinated by operation of rigid mechanical devices which prevent any speed variation.

With this solution, the rotation speed of the first internal upper drum cannot be varied with respect to that of the second external lower drum. In particular, the rotation speed cannot be adapted to the size of the container, which is particularly important in the case of bottles available in a wide range of sizes.

More precisely, with the well-known types of unscrambler, the rotation speed cannot be regulated in order to synchronise the two drums.

Under these conditions, the containers may tip over and bump into each other or against the walls of the chutes, particularly when being transferred from the chutes connected to the first internal upper drum to those connected to the second external lower drum. The ability to regulate the speed and to change the support pads and funnel-shaped hoppers, or chutes is particularly important when the machine is designed to handle bottles of different sizes.

In prior art machines, the connection gears in the drive unit have to be changed in the event of a size changeover, wasting a great deal of time and reducing the productivity of the machine.

The aim of the present invention is to eliminate the above-mentioned problems, creating a machine for orienting and aligning plastic containers of varying size which adapts the rotation speed of the moving elements to changes in the size of the containers, particularly in the case of bottles.

Another aim of the present invention is to prevent the containers from tipping over or bumping into each other or against the walls of the chutes, particularly when being transferred from the rotating hopper to the drum rotating coaxially with it.

These aims are fully attained by the machine for orienting and aligning plastic containers of varying size, according to claims 1 and 5.

A great advantage of the unscrambler according to one embodiment of the present invention is the ability to rotate the second drum by means of a second drive unit mechanically independent of the first unit.

This and other aims are more clearly evidenced in the description which follows, of a preferred embodiment, illustrated merely by way of example without restriction in the accompanying drawings, in which:
- figure 1 shows a front cross-sectional view of a part of an unscrambler according to a first embodiment of the present invention;
- figure 2 shows a front plane view of a part of the unscrambler according to the first embodiment;
- figures 3, 4, 5, 6 and 7 show a front cross-sectional view of a part of an unscrambler according to four further embodiments.

With reference to the accompanying drawings, the numeral 1 denotes a first rotating drum forming part of a machine for orienting and aligning plastic containers of varying size. The first drum is rotated by a first drive unit 2.

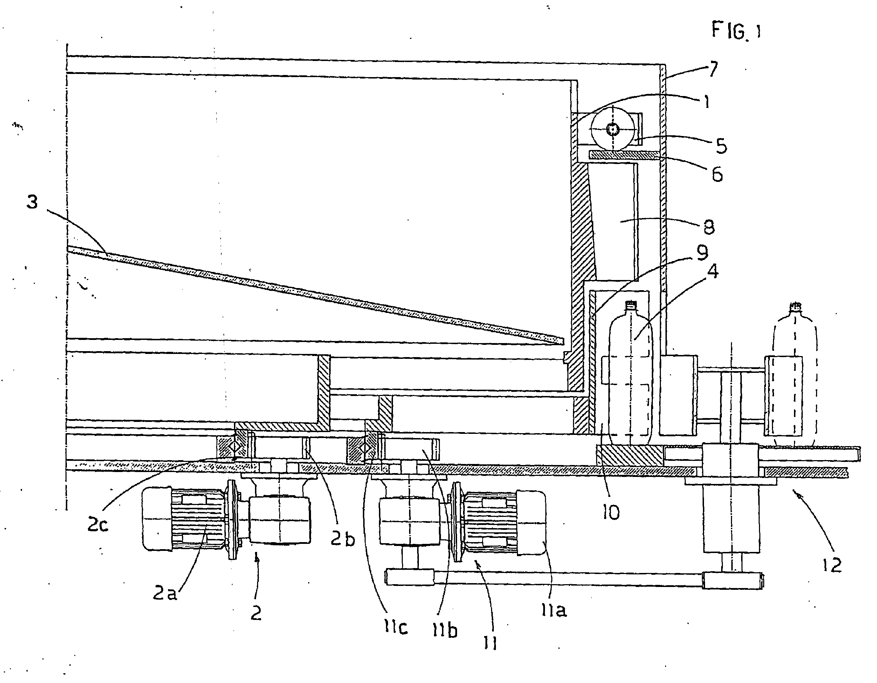

This first drive unit 2 comprises, as illustrated in figure 1, a first motor 2a which drives a first driving gear 2b engaging with a first driven gear 2c connected to the first drum 1.

A fixed conical structure 3, for receiving the containers 4 fed in bulk internally from the top of the unscrambler, is mounted inside the first drum 1.

The containers are transferred from the base of the conical structure 3 and the first drum 1 to the top of the first drum by operation of means designed to convey the containers. Said conveying means are well-known and therefore not illustrated, and may include, for example, a plurality of blades connected to the first drum 1, designed to push the containers 4 along a helical track, or a plurality of elevators rotating with the first drum 1 and translatable between the base of the conical structure 3 and the top of the first drum 1.

Support pads or trays 5 are mounted at the top of the first drum 1, on the external wall of the first drum and arranged tangentially along the upper circumference.

The pads 5 are at least as wide as the height of the container 4 in order to accommodate the container in horizontal attitude, as illustrated at the top of figure 1. The pads 5 also include means for turning over the containers 4, causing the containers to rotate substantially by 90° with their necks pointing upwards at all times. These turning means are well known and therefore not illustrated in the figure.

The base of the pads 5 is composed of a fixed annular ledge 6 connected to a fixed drum 7. The fixed drum forms the external casing of the unscrambler and is mounted at an appropriate distance from the first drum 1 in order to create an annular chamber between the fixed drum 7 and the first drum.

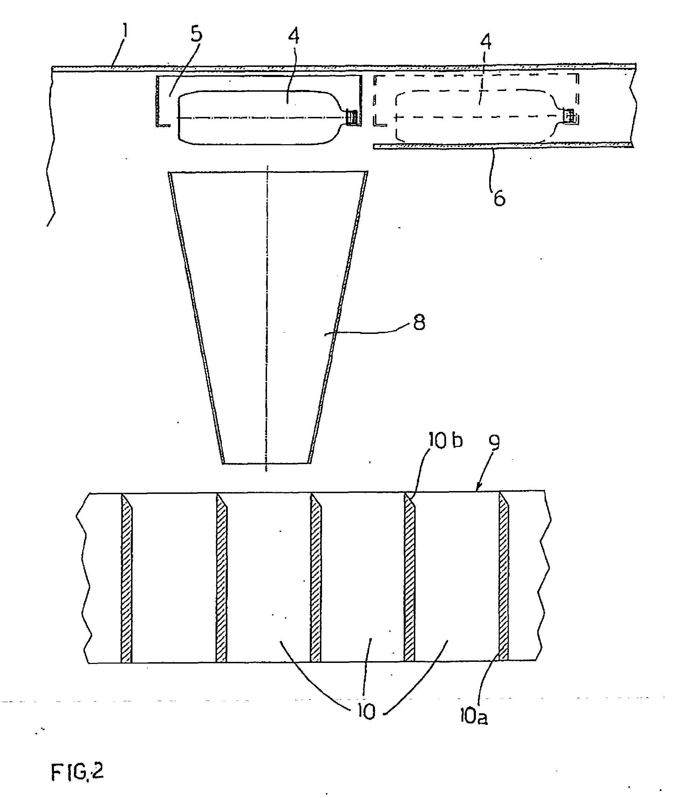

The annular ledge 6 includes a number of breaks, as illustrated in figure 2, which allow the container 4 to drop, in a vertical attitude, below the pads 5. Figure 2 illustrates the movement of the container 4 from the position in which it rests on the annular ledge 6, indicated by the dotted line, to the position in which the container 4 no longer rests on the ledge, indicated by the continuous line.

Below the pads 5, the first drum 1 also comprises a first set of chutes 8, mounted on the external wall of the first drum. This first chutes 8 are funnel-shaped for receiving the containers positioned in a substantially horizontal attitude while they are being turned over by the pads and placed in a vertical attitude, and then conveyed out of the unscrambler.

A second rotating drum 9 mounted underneath the first set of chutes 8 rotates coaxially with the first drum 1 and is equipped with a second set of chutes 10.

These second chutes 10 are mounted below the first chutes 8 and form a single track, the output section of the first chutes 8 being aligned with the input section of the second chutes 10, as illustrated in figure 2. In particular, the second chutes 10 may consist of a plurality of radial walls 10a.

The number of chutes 10 is significantly higher than the number of chutes 8.

In the unscrambler the first drum 1 and the second drum 9 are driven at different speeds with different ratios.

In particular, according to the embodiment illustrated in figure 1, the second drum 9 is conveniently rotated by a second drive unit 11 mechanically independent of the first unit 2.

The second drive unit 11 is composed of a second motor 11a which drives a second driving gear 11b engaging with a second driven gear 11c connected to the second drum 9.

In particular, the second motor 11 a can conveniently be either a brushless motor or a stepping motor, thereby allowing the rotation speed of the second drum 9 to be regulated and therefore adapted to different sized containers, particularly in the case of bottles .

In an alternative embodiment, the first drive unit 2 also comprises a brushless motor 2a in order to regulate the speed of the first drum in relation to that of the second drum, or to regulate the speed of both.

Another convenient feature is the inclusion of an angular position detector in the first drive unit 2, designed to regulate the rotation of the second drum 9 by varying the rotation speed of the second motor 11a.

The ability to synchronise the rotation speed of the two drums is particularly advantageous since the containers can be transferred, as they drop from the first chutes 8 into the second chutes 10, along a single track, thereby preventing them from bumping against the sides of the second chutes and tipping over. By varying the speed according to the type of bottle being handled, the bottle can drop gradually and thereby avoid tipping over which could jam the machine. By preventing the bottle from tipping over, it can also be transported through the machine in a considerably shorter period.

The upper portion of the radial walls 10a are rounded to help the bottles drop gradually and thereby create a channelled chute 10b.

As illustrated in figure 1, the second drive unit 11 also drives a conveyor 12 which transports the containers 4 off the machine, picking them up from the bottom of the second set of chutes 10.

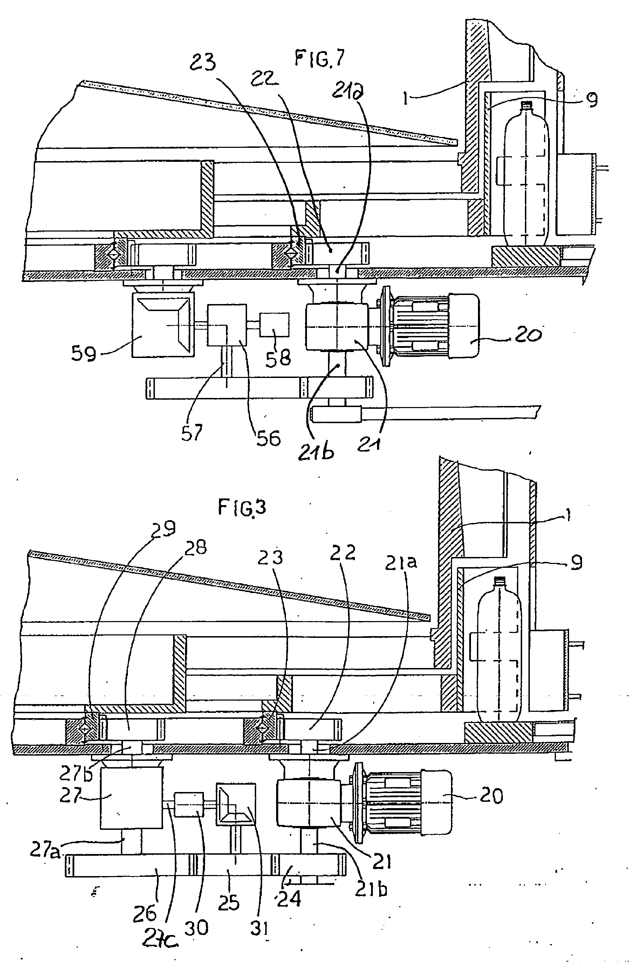

In further embodiments, the machine according to the present invention may include a motor 20 which directly rotates either the first or second drum and means for transmitting movement to the other of the two drums, thereby allowing the two drums to be driven at different speeds with different ratios. The embodiments of the transmission means are illustrated in figures 3 to 7.

In the embodiment illustrated in figure 3, there is a single motor 20 equipped with a reduction gear unit 21 with twin output shafts 21a and 21b. A gear 22, engaging with a driven gear 23 connected to the second drum 9, is keyed onto the shaft 21a.

A gear 24, engaging with a gear 25 which transmits movement to a further gear 26 keyed onto an input shaft 27a of a mechanical motor timing device 27, is keyed onto the shaft 21b; a gear 28 engaging with a crown gear 29 connected to the drum 1 is keyed onto the output shaft 27b of the timing device.

The mechanical motor timing device 27 conventionally comprises a phase correction shaft 27c which is connected through an electric clutch 30 and an angular driving gear 31, to the gear 25. By operating the electric clutch 30, the synchronisation of the input shaft and output shaft in the timing device can be varied, thereby varying the synchronisation of the first drum 1 and the second drum 9.

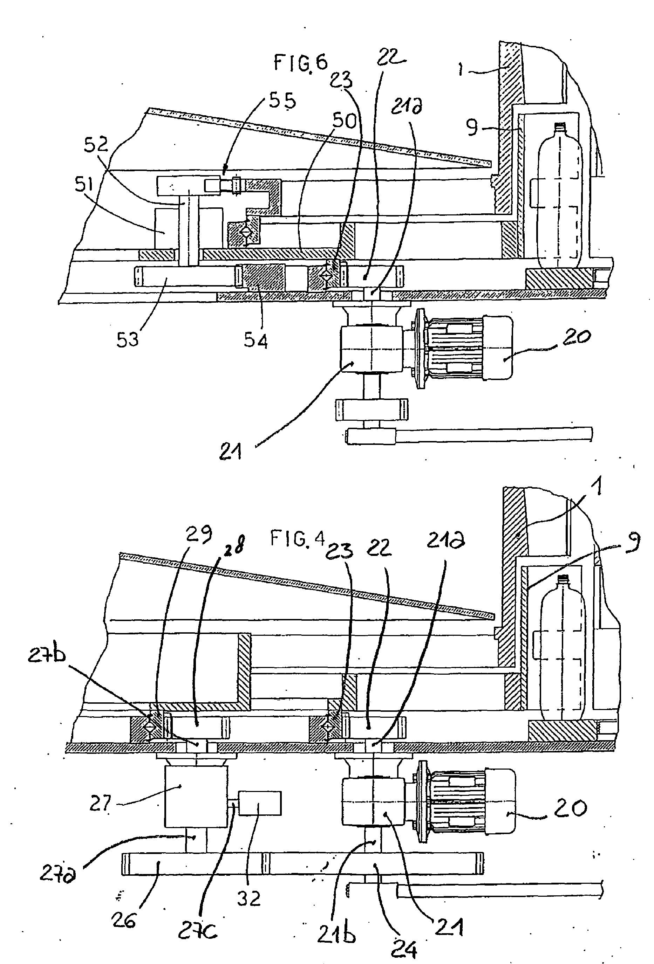

Figure 4 illustrates a simpler embodiment which is nevertheless similar to the embodiment of figure 3, where the gear 25 and the angular driving gear 31 driving the shaft 27c through the clutch 30 are replaced with a brushless motor 32, or equivalent, keyed directly onto the phase correction shaft 27c.

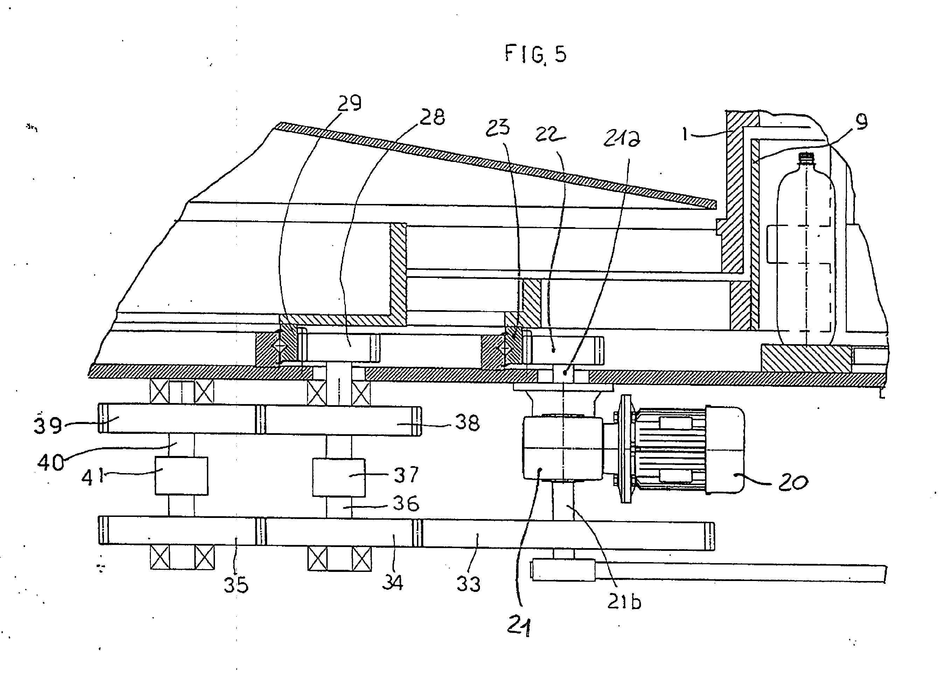

Figure 5 illustrates an embodiment in which a gear 33, engaged with a gear 34 which transmits movement to a gear 35, is keyed onto the shaft 21b. The gear 34 is keyed onto a shaft 36 which transmits movement through an electric clutch 37, to a gear 38 which in turn engages with a gear 39 keyed onto a shaft 40 connected through an electric clutch 41, to the gear 35. The above-mentioned system allows the speed of the first drum 1 to be varied, that is, by energising either one or other of the two electromagnetic clutches, the speed is regulated according to the ratio between the gears.

According to yet another embodiment illustrated in figure 6, the motor-driven gear 22 engages with a crown gear 23 which rotates the second drum 9 and a plate 50 which, by means of a support 51 secured to the plate, keeps a shaft 52 running idly; a gear 53 is keyed to one end of the shaft 52 and engages with a crown gear 54 connected to the fixed frame of the machine.

A Maltese cross-type device 55 is keyed onto the other end of the shaft 52 and transmits its typical form of movement to the first drum.

The embodiment illustrated in figure 7 comprises a differential gear 56 whose input shaft 57 is motor-driven by a conventional gear transmission whilst the two output shafts are fitted, on one side with an electric brake 58, and on the other, with an angular driving gear 59 which transmits movement to the first drum 1.

By acting on the electric brake 58, the speed is varied and transmitted by the differential gear to the angular gear 59 and then to the drum 1. The electric brake 58 may also be replaced with a brushless motor or any hydraulic or mechanical actuator capable of varying the revolutions per minute. In several of the embodiments described, the speed of the first drum 1 is varied, but it is clear that the aforementioned systems can be applied to the rotating action of the second drum 9, varying the speed of the second drum in relation to that of the first which is left to rotate at a fixed, constant speed.

To conclude therefore, in the embodiments illustrated in figures 3 to 7, envisaging only one motor to rotate both drums, mechanical, electrical or electromagnetic connection means are adopted which allow the ratio between the rotation rates of the two drums to be varied at will.

The unscrambler according to the present invention offers a number of significant advantages.

In particular, by allowing the rotation speed of the second drum 9 to be controlled independently of the speed of the first drum 1 and using a brushless motor to drive the second drum, the functions of the machine can be adapted to the varying size of the container, particularly in the case of bottles.

The speed of the second drum 9 in relation to that of the first drum 1 can also be controlled electronically, with the use of an encoder fitted on the first motor 2a to detect its angular position, thereby synchronising the containers 4 as they drop, given the absence of any break between the first and second sets of chutes.

With the use of a brushless motor, the rotation speeds can be programmed according to the size of the container being handled and the operator does not therefore need to make any adjustments to the machine in response to a size changeover.

## Claims

1. A machine for orienting and aligning plastic containers (4) of varying size comprising:
- a first rotating drum (1);
- means for transferring the plastic containers (4) from the base of a fixed conical structure (3) mounted inside the first rotating drum (1) to the top of the first rotating drum (1);
- a first set of chutes (8) anchored to the external wall of the first rotating drum (1) for receiving said plastic containers (4);
- a second drum (9) rotating coaxially with the first rotating drum (1) and equipped with a second set of chutes (10) fitted below the first set of chutes (8) for receiving the plastic containers (4) in a vertical attitude, whereby
the first and second rotating drums (1, 9) are motor-driven at different speeds,
**characterised in that** the first rotating drum (1) is rotated by a first drive unit (2) and that the second rotating drum (9) is rotated by a second drive unit (11) mechanically independent of the first drive unit (2), thereby allowing the ratio between the speeds to be varied.

2. The machine according to claim 1 wherein the second drive unit (11) comprises either a stepping motor or a brushless motor (11a).

3. The machine according to claim 1 wherein the first drive unit (2) comprises either a stepping motor or a brushless motor (2a).

4. The machine according to any of the previous claims, wherein the first drive unit (2) comprises an angular position detector which regulates the rotation of the second drum (9).

5. A machine for orienting and aligning plastic containers (4) of varying size comprising:
a first rotating drum (1);
means for transferring the plastic containers (4) from the base of a fixed conical structure (3) mounted inside the first rotating drum (1) to the top of the first rotating drum (1);
a first set of chutes (8) anchored to the external wall of the first rotating drum (1) for receiving said plastic containers (4);
a second drum (9) rotating coaxially with the first rotating drum (1) and equipped with a second set of chutes (10) fitted below the first set of chutes (8) for receiving the plastic containers (4) in a vertical attitude, whereby the first and second rotating drums (1, 9) are motor-driven at different speeds,
**characterized in that** either the first or the second rotating drum (1, 9) is directly rotated by a motor (20) whereby the other of the first or second rotating drum (1, 9) is rotated by the motor (20) through mechanical, electrical or electromagnetic means for transmitting movement which allow the ratio between the speeds to be varied.

6. The machine according to claim 5 wherein said movement transmitting means comprise a reduction gear unit (21) with twin output shafts (21a, 21b) mounted to the motor (20), a gear (22) keyed onto an output shaft (21a) engaging a driven gear (23) connected to the second rotating drum (9), a gear (24) keyed onto the other output shaft (21b) engaging a gear (25) transmitting movement to a further gear (26) keyed onto the input shaft (27a) of a mechanical motor timing device (27), and a gear (28) keyed onto the output shaft (27b) of the timing device (27) engaging a crown gear (29) connected to the first rotating drum (1).

7. The machine according to claim 6 wherein the mechanical timing device (27) comprises a phase correction shaft (27c) which is connected through an electrical clutch (30) and an angular gear (31) to the gear (25).

8. The machine according to claim 5 wherein said movement transmitting means comprise a reduction gear (21) with twin output shafts (21a, 21b) mounted to the motor (20), a gear (22) keyed onto an output shaft (21a) engaging a driven gear (23) connected to the second rotating drum (9), a gear (24) keyed onto the other output shaft (21b) engaging a gear (26) keyed onto an input shaft (27a) of a mechanical motor timing device (27) said timing device (27) comprising a phase correction shaft (27c) and a brushless motor (32) directly keyed onto the phase correction shaft (27c), and a gear (28) keyed onto the output shaft (27b) of the timing device (27) engaging a crown gear (29) connected to the first rotating drum (1).

9. The machine according to claim 5 wherein said movement transmitting means comprise a reduction gear unit (21) with twin output shafts (21a, 21b) mounted to the motor (20), a gear (22) keyed onto an output shaft (21a) engaging a driven gear (23) connected to the second rotating drum (9), and a first gear (33) keyed onto the other output shaft (21b) engaging a second gear (34) transmitting movement to a third gear (35), said second gear (34) being keyed onto a shaft (36)transmitting movement through an electric clutch (37) to a fourth gear (38) engaging a crown gear (29) connected to the first rotating drum (1), said fourth gear (38) engaging with a fifth gear (39) keyed onto a shaft (40) connected through an electric clutch (41) to the third gear (35).

10. The machine according to claim 5 wherein said movement transmitting means comprise a reduction gear unit (21) mounted to the motor (20), a gear (22) keyed onto an output shaft (2 1 a) of the gear unit (21) engaging a driven gear (23) connected to the second rotating drum (9), a support (51) secured to a plate (50) on the second rotating drum (9), a shaft (52) running idle in said support (51),
a gear (53) keyed to a first end of said shaft (52) engaging with a crown gear (54) connected to a fixed frame of the machine and a Maltese cross-type device (55) keyed onto a second end of the shaft (52) to transmit its motion to the first rotating drum (1).

11. The machine according to claim 5 wherein said movement transmitting means comprise a reduction gear unit (21) with twin output shafts (21a, 21b) mounted to the motor (20), a gear (22) keyed onto an output shaft (21a) engaging a driven gear (23) connected to the second rotating drum (9), and a differential gear (56) comprising an input shaft (57) and two output shafts, whereby the input shaft (57) is motor-driven through a gear transmission engaging the other output shaft (21b), one output shaft is fitted with an electric brake (58), and the other output shaft is fitted with an angular driving gear (59) which transmits movement to the first rotating drum (1).

## Patentansprüche

1. Maschine zum Orientieren und Ausrichten von Kunststoffbehältern (4) unterschiedlicher Größe, umfassend:
- eine erste Drehtrommel (1);
- Mittel zum Weiterleiten der Kunststoffbehälter (4) von der Grundfläche einer in der ersten Drehtrommel (1) befestigten unbeweglichen konischen Konstruktion(3) zum oberen Ende der ersten Drehtrommel (1);
- eine erste Gruppe von Rutschen (8), die an der Außenwand der ersten Drehtrommel (1) zum Aufnehmen der Kunststoffbehälter (4) verankert ist;
- eine zweite Trommel (9), die sich koaxial mit der ersten Drehtrommel (1) dreht und mit einer zweiten Gruppe von Rutschen (10) ausgestattet ist, die unter der ersten Gruppe von Rutschen (8) zum Aufnehmen der Kunststoffbehälter (4) in vertikaler Stellung angeordnet ist, wodurch
die erste und die zweite Drehtrommel (1, 9) bei verschiedenen Geschwindigkeiten motorisch angetrieben werden, **dadurch gekennzeichnet, dass** die erste Drehtrommel (1) von einer ersten Antriebseinheit (2) gedreht wird und dass die zweite Drehtrommel (9) von einer zweiten, von der ersten Antriebseinheit (2) mechanisch unabhängigen Antriebseinheit (11) gedreht wird, wodurch das Verhältnis zwischen den Geschwindigkeiten variiert werden kann.

2. Maschine nach Anspruch 1, wobei die zweite Antriebseinheit (11) entweder einen Schrittmotor oder einen bürstenlosen Motor (11a) umfasst.

3. Maschine nach Anspruch 1, wobei die erste Antriebseinheit (2) entweder einen Schrittmotor oder einen bürstenlosen Motor (2a) umfasst.

4. Maschine nach einem der vorangehenden Ansprüche, wobei die erste Antriebseinheit (2) einen Drehwinkelsensor umfasst, der die Drehung der zweiten Trommel (9) reguliert.

5. Maschine zum Orientieren und Ausrichten von Kunststoffbehältern (4) unterschiedlicher Größe, umfassend:
eine erste Drehtrommel (1);
Mittel zum Weiterleiten der Kunststoffbehälter (4) von der Grundfläche einer in der ersten Drehtrommel (1) befestigten unbeweglichen konischen Konstruktion (3) zum oberen Ende der ersten Drehtrommel (1);
eine erste Gruppe von Rutschen (8), die an der Außenwand der ersten Drehtrommel (1) zum Aufnehmen der Kunststoffbehälter (4) verankert ist;
eine zweite Trommel (9), die sich koaxial mit der ersten Drehtrommel (1) dreht und mit einer zweiten Gruppe von Rutschen (10) ausgestattet ist, die unter der ersten Gruppe von Rutschen (8) zum Aufnehmen der Kunststoffbehälter (4) in vertikaler Stellung angeordnet ist, wodurch die erste und die zweite Drehtrommel (1, 9) bei verschiedenen Geschwindigkeiten motorisch angetrieben werden,
**dadurch gekennzeichnet, dass** entweder die erste oder die zweite Drehtrommel (1, 9) direkt von einem Motor (20) gedreht wird, wodurch die andere der ersten oder zweiten Drehtrommel (1, 9) vom Motor (20) durch mechanische, elektrische oder elektromagnetische Mittel zur Bewegungsübertragung gedreht wird, durch die das Verhältnis zwischen den Geschwindigkeiten variiert werden kann.

6. Maschine nach Anspruch 5, wobei die Mittel zur Bewegungsübertragung eine am Motor (20) angebrachte Untersetzungsgetriebeeinheit (21) mit doppelten Abtriebswellen (21a, 21b), ein Getriebe (22), das schlüssig auf eine Abtriebswelle (21a) aufgesetzt ist und dabei in ein angetriebenes Getriebe (23) greift, das mit der zweiten Drehtrommel (9) verbunden ist, ein Getriebe (24), das schlüssig auf die andere Abtriebswelle (21b) aufgesetzt ist und dabei in ein Getriebe (25) greift, das Bewegung an ein weiteres Getriebe (26) überträgt, das schlüssig auf die Antriebswelle (27a) einer mechanischen Motorsynchronisiervorrichtung (27) aufgesetzt ist, und ein Getriebe (28), das schlüssig an die Abtriebswelle (27b) der Synchronisiervorrichtung (27) aufgesetzt ist und dabei in einen Zahnkranz (29) greift, der mit der ersten Drehtrommel (1) verbunden ist, umfassen.

7. Maschine nach Anspruch 6, wobei die mechanische Synchronisiervorrichtung (27) eine Phasenausgleichswelle (27c) umfasst, die durch eine elektrische Kupplung (30) und ein Winkelgetriebe (31) mit dem Getriebe (25) verbunden ist.

8. Maschine nach Anspruch 5, wobei die Mittel zur Bewegungsübertragung ein am Motor (20) angebrachtes Untersetzungsgetriebe (21) mit doppelten Abtriebswellen (21a, 21b), ein Getriebe (22), das schlüssig auf eine Abtriebswelle (21a) aufgesetzt ist und dabei in ein angetriebenes Getriebe (23) greift, das mit der zweiten Drehtrommel (9) verbunden ist, ein Getriebe (24), das schlüssig auf die andere Abtriebswelle (21b) aufgesetzt ist und dabei in ein Getriebe (26) greift, das schlüssig auf eine Antriebswelle (27a) einer mechanischen Motorsynchronisiervorrichtung (27) aufgesetzt ist, wobei die Synchronisiervorrichtung (27) eine Phasenausgleichswelle (27c) und einen bürstenlosen Motor (32) umfasst, der direkt schlüssig auf die Phasenausgleichswelle (27c) aufgesetzt ist, und ein Getriebe (28), das schlüssig auf die Abtriebswelle (27b) der Synchronisiervorrichtung (27) aufgesetzt ist und dabei in einen Zahnkranz (29) greift, der mit der ersten Drehtrommel (1) verbunden ist, umfassen.

9. Maschine nach Anspruch 5, wobei die Mittel zur Bewegungsübertragung eine am Motor (20) angebrachte Untersetzungsgetriebeeinheit (21) mit doppelten Abtriebswellen (21a, 21b), ein Getriebe (22), das schlüssig auf eine Abtriebswelle (21a) aufgesetzt ist und dabei in ein angetriebenes Getriebe (23) greift, das mit der zweiten Drehtrommel (9) verbunden ist, und ein erstes Getriebe (33), das schlüssig auf die andere Abtriebswelle (21b) aufgesetzt ist und dabei in ein zweites Getriebe (34) greift und dabei Bewegung an ein drittes Getriebe (35) überträgt, wobei das zweite Getriebe (34), das schlüssig auf eine Welle aufgesetzt ist (36), durch eine elektrische Kupplung (37) Bewegung an ein viertes Getriebe (38) überträgt und dabei in einen Zahnkranz (29) greift, der mit der ersten Drehtrommel (1) verbunden ist, wobei das vierte Getriebe (38) in ein fünftes Getriebe (39) greift, das schlüssig auf eine Welle (40) aufgesetzt ist, die durch eine elektrische Kupplung (41) mit dem dritten Getriebe (35) verbunden ist, umfassen.

10. Maschine nach Anspruch 5, wobei die Mittel zur Bewegungsübertragung eine an den Motor (20) angebrachte Untersetzungsgetriebeeinheit (21), ein Getriebe (22), das schlüssig auf eine Abtriebswelle (21a) der Getriebeeinheit (21) aufgesetzt ist und dabei in ein angetriebenes Getriebe (23) greift, das mit der zweiten Drehtrommel (9) verbunden ist, einen Träger (51), der auf der zweiten Drehtrommel (9) an einer Platte (50) befestigt ist, eine Welle (52), die in diesem Träger (51) leerläuft,
ein Getriebe (53), das schlüssig auf einem ersten Ende der Welle (52) aufgesetzt ist und dabei in einen Zahnkranz (54) greift, der mit einem unbeweglichen Maschinenrahmen und einer malteserkreuzähnlichen Vorrichtung (55) verbunden ist, die schlüssig auf ein zweites Ende der Welle (52) aufgesetzt ist, um ihre Bewegung an die erste Drehtrommel (1) zu übertragen, umfassen.

11. Maschine nach Anspruch 5, wobei die Mittel zur Bewegungsübertragung eine am Motor (20) angebrachte Untersetzungsgetriebeeinheit (21) mit doppelten Abtriebswellen (21a, 21b), ein Getriebe (22), das schlüssig auf eine Abtriebswelle (21a) aufgesetzt ist und dabei in ein angetriebenes Getriebe (23) greift, das mit der zweiten Drehtrommel (9) verbunden ist, und ein Differentialgetriebe (56), umfassend eine Antriebswelle (57) und zwei Abtriebswellen, wodurch die Antriebswelle (57) durch eine Getriebeübertragung motorisch angetrieben ist und dabei in die andere Abtriebswelle (21b) greift, eine Abtriebswelle (21b) mit einer elektrischen Bremse (58) ausgestattet ist, und die andere Abtriebswelle mit einem Winkelgetriebeantrieb (59) ausgestattet ist, der Bewegung an die erste Drehtrommel (1) überträgt, umfassen.

## Revendications

1. Machine pour l'orientation et l'alignement de récipients en plastique (4) de tailles différentes comprenant :
- un premier tambour rotatif (1) ;
- des moyens pour faire passer les récipients en plastique (4) du bas d'une structure conique fixe (3) montée à l'intérieur du premier tambour rotatif (1) en haut du premier tambour rotatif (1) ;
- un premier ensemble de goulottes d'amenée (8) ancrées à la paroi extérieure du premier tambour rotatif (1) pour recevoir lesdits récipients (4) ;
- un deuxième tambour (9) tournant coaxialement avec le premier tambour rotatif (1) et muni d'un deuxième ensemble de goulottes d'amenée (10) installées sous le premier ensemble de goulottes d'amenée (8) pour recevoir les récipients en plastique (4) à la verticale, dans laquelle
le premier et le deuxième tambours rotatifs (1, 9) sont commandés par un moteur à des vitesses différentes, **caractérisée en ce que** le premier tambour rotatif (1) est actionné par une première unité d'entraînement (2) et que le deuxième tambour rotatif (9) est actionné par une deuxième unité d'entraînement (11) mécaniquement indépendante de la première unité d'entraînement (2), permettant ainsi de varier le rapport des vitesses.

2. Machine selon la revendication 1, dans laquelle la deuxième unité d'entraînement (11) comprend soit un moteur pas à pas soit un moteur sans balais (11a) .

3. Machine selon la revendication 1, dans laquelle la première unité d'entraînement (2) comprend soit un moteur pas à pas soit un moteur sans balais (2a).

4. Machine selon l'une quelconque des revendications précédentes, dans laquelle la première unité d'entraînement (2) comprend un capteur de position angulaire qui règle la rotation du deuxième tambour (9).

5. Machine pour l'orientation et l'alignement de récipients en plastique (4) de tailles différentes comprenant :
- un premier tambour rotatif (1) ;
- des moyens pour faire passer les récipients en plastique (4) du bas d'une structure conique fixe (3) montée à l'intérieur du premier tambour rotatif (1) en haut du premier tambour rotatif (1) ;
- un premier ensemble de goulottes d'amenée (8) ancrées à la paroi extérieure du premier tambour rotatif (1) pour recevoir lesdits récipients en plastique (4) ;
- un deuxième tambour (9) tournant coaxialement avec le premier tambour rotatif (1) et muni d'un deuxième ensemble de goulottes d'amenée (10) installées sous le premier ensemble de goulottes d'amenée (8) pour recevoir les récipients en plastique (4) à la verticale, où le premier et le deuxième tambours rotatifs (1, 9) sont commandés par un moteur à des vitesses différentes,
**caractérisée en ce que** soit le premier soit le deuxième tambour rotatif (1, 9) est directement actionné par un moteur (20), et que l'autre tambour rotatif, soit le premier soit le deuxième (1, 9), est actionné par le moteur (20) par des moyens mécaniques, électriques ou électromagnétiques pour transmettre le mouvement qui permet de varier le rapport des vitesses.

6. Machine selon la revendication 5, dans laquelle lesdits moyens de transmission du mouvement comprennent un mécanisme réducteur (21) avec deux arbres de prise de mouvement (21a, 21b) monté sur le moteur (20), une roue (22) calée sur un arbre de prise de mouvement (21a) engageant une roue menée (23) connectée au deuxième tambour rotatif (9), une roue (24) calée sur l'autre arbre de prise de mouvement (21b) engageant une roue (25) transmettant le mouvement à une autre roue (26) calée sur l'arbre d'entraînement (27a) d'un synchroniseur mécanique du moteur (27), et une roue (28) calée sur l'arbre de prise de mouvement (27b) du synchroniseur (27) engageant une roue plate (29) connectée au premier tambour rotatif (1).

7. Machine selon la revendication 6, dans laquelle le synchroniseur mécanique (27) comprend un arbre correcteur des phases (27c) connecté par un embrayage électrique (30) et un engrenage angulaire (31) à la roue (25).

8. Machine selon la revendication 5, dans laquelle lesdits moyens de transmission du mouvement comprennent un mécanisme réducteur (21) avec deux arbres de prise de mouvement (21a, 21b) monté sur le moteur (20), une roue (22) calée sur un arbre de prise de mouvement (21a) engageant une roue menée (23) connectée au deuxième tambour rotatif (9), une roue (24) calée sur l'autre arbre de prise de mouvement (21b) engageant une roue (26) calée sur un arbre d'entraînement (27a) d'un synchroniseur mécanique du moteur (27), ledit synchroniseur (27) comprenant un arbre correcteur des phases (27c) et un moteur sans balais (32) calé directement sur l'arbre correcteur des phases (27c), et une roue (28) calée sur l'arbre de prise de mouvement (27b) du synchroniseur (27) engageant une roue plate (29) connectée au premier tambour rotatif (1).

9. Machine selon la revendication 5, dans laquelle lesdits moyens de transmission du mouvement comprennent un mécanisme réducteur (21) avec deux arbres de prise de mouvement (21a, 21b) monté sur le moteur (20), une roue (22) calée sur un arbre de prise de mouvement (21a) engageant une roue menée (23) connectée au deuxième tambour rotatif (9), et une première roue (33) calée sur l'autre arbre de prise de mouvement (21b) engageant une deuxième roue (34) transmettant le mouvement à une troisième roue (35), ladite deuxième roue (34) étant calée sur un arbre (36) transmettant le mouvement par un embrayage électrique (37) à une quatrième roue (38) engageant une roue plate (29) connectée au premier tambour rotatif (1), ladite quatrième roue (38) s'engageant avec une cinquième roue (39) calée sur un arbre (40) connecté par un embrayage électrique (41) à la troisième roue (35).

10. Machine selon la revendication 5, dans laquelle lesdits moyens de transmission du mouvement comprennent un mécanisme réducteur (21) monté sur le moteur (20), une roue (22) calée sur un arbre de prise de mouvement (21a) du mécanisme réducteur (21) engageant une roue menée (23) connectée au deuxième tambour rotatif (9), un support (51) fixé à un plateau (50) sur le deuxième tambour rotatif (9), un arbre (52) tournant librement sur ledit support (51),
une roue (53) calée à une première extrémité dudit arbre (52) s'engageant avec une roue plate (54) connectée à un bâti fixe de la machine et un dispositif à croix de Malte (55) calé sur une deuxième extrémité de l'arbre (52) pour transmette son mouvement au premier tambour rotatif (1).

11. Machine selon la revendication 5, dans laquelle lesdits moyens de transmission du mouvement comprennent un mécanisme réducteur (21) avec deux arbres de prise de mouvement (21a, 21b) monté sur le moteur (20), une roue (22) calée sur un arbre de prise de mouvement (21a) engageant une roue menée (23) connectée au deuxième tambour rotatif (9), et une roue de différentiel (56) comprenant un arbre d'entraînement (57) et deux arbres de prise de mouvement, dans laquelle l'arbre d'entraînement (57) est motorisé au moyen d'une transmission par engrenages engageant l'autre arbre de prise de mouvement (21b), un arbre de prise de mouvement est équipé d'un frein électrique (58), et l'autre arbre de prise de mouvement est muni d'un engrenage angulaire (59) qui transmet le mouvement au premier tambour rotatif (1).
